# EUROPEAN PATENT APPLICATION

(11) **EP 4 254 621 A1**
(43) Date of publication of application: **04.10.2023**
(21) Application number: 22826577.3
(22) Date of filing: 21.10.2022
(51) Int. Cl.: H01M 50/188, H01M 50/152

(54) **CYLINDRICAL BATTERY COVER PLATE STRUCTURE, AND CYLINDRICAL BATTERY**

(30) Priority: 10.02.2022 CN 202220272109 U; 10.02.2022 CN 202210124996
(71) Applicant: Eve Power Co., Ltd., Jingmen, Hubei 448000 (CN)
(72) Inventor: LU, Haixu, Jingmen, Hubei 448000 (CN); ZHAO, He, Jingmen, Hubei 448000 (CN); HUANG, Liming, Jingmen, Hubei 448000 (CN); YANG, Cheng, Jingmen, Hubei 448000 (CN); XU, Yuebin, Jingmen, Hubei 448000 (CN); HE, Wei, Jingmen, Hubei 448000 (CN)
(74) Representative: Murgitroyd & Company
(86) International application number: PCT/CN2022/126633
(87) International publication number: WO 2023/151313

(57) **Abstract**

A cover plate of a cylindrical battery and the cylindrical battery are provided by the present application. The cover plate of the cylindrical battery includes a pole column. A bottom of the pole column is connected with a current collecting plate. The pole column is sleeved with a sealing ring. A first insulating element and a cover slip are sequentially sleeved on an outside of the sealing ring along a vertical direction. The first insulating element insulates the current collecting plate from the cover slip.

## Description

### CROSS REFERENCE TO RELATED APPLICATIONS

This application claims priority to Chinese Patent Application No. 202220272109.0 filed with the Chinese Patent Office on Feb. 10, 2022 and Chinese Patent Application No. 2022210124966.1 filed with the Chinese Patent Office on Feb. 10, 2022, both of which are incorporated herein by reference in their entities.

### TECHNICAL FIELD

The present application relates to the field of battery technologies, and for example to a cover plate of a cylindrical battery and the cylindrical battery.

### BACKGROUND

A manufacturing process of a cylindrical battery is mature and has high versatility, so it is widely used in fields such as electric tools and electric light vehicles. With improvement of service performance requirements, energy of traditional cylindrical batteries cannot meet requirements. Ways to increase energy density of batteries is not only to increase a size of battery and increase a pergram capacity of material system, but also needs to make new changes to structure of positive and negative cover slips of the battery, so as to meet higher rate requirements of the battery.

A battery cover slip in a related art generally includes a pole column, a current collecting plate, a lower insulating sheet, and a top cover slip. The pole column passes through the current collecting plate, the lower insulating plate, and the top cover slip successively. A countersunk hole is defined on the top cover slip for the pole column passing through the hole. The countersunk hole is provided with an insulating sheet and a sealing layer in sequence from an inside to an outside. The current collecting plate is fixedly connected with a roll core. The lower insulating sheet is clamped with the current collecting plate, and is fixedly connected to the top cover slip. The sealing layer is fixedly connected with the top cover slip. The current collecting plate can only be sleeved on the pole column with a large through hole, and a contact area between the pole column and the current collecting plate is smaller with the battery cover slip of this structure, resulting in a large overcurrent internal resistance of batteries. Since more components are sleeved on the pole column, a height of the pole column is greater, resulting in waste of materials and higher production costs. In addition, due to a welding mark in a welding area of the pole column and the current collecting plate, a surface of the welding area is uneven, so assembly between the current collecting plate and the lower insulating sheet is not tight, has a poor sealing ability and has a risk of leakage.

Therefore, it is urgent to provide a cover plate of a cylindrical battery to solve the above problems.

### SUMMARY

A cover plate of a cylindrical battery is provided in an embodiment of the present application, the cover plate of the cylindrical battery has good sealing ability, is not easy to leak liquid, has a large contact area between a current collecting plate and a pole column, has a small overcurrent internal resistance, has a low height of the pole column, and has low production cost.

In a first aspect, the cover plate of the cylindrical battery is provided in an embodiment of the present application, including a pole column. A bottom of the pole column is connected to a current collecting plate. The pole column is sleeved with a sealing ring. A first insulating element and a cover slip are sequentially sleeved on an outside of the sealing ring along a vertical direction. The first insulating element insulates the current collecting plate from the cover slip.

In an embodiment, the pole column includes a base and an upright post connected to each other, the current collecting plate is connected to a side of the base away from the upright post, the sealing ring is sleeved on the upright post, and a bottom of the sealing ring and a bottom of the first insulating element are in contact with end surfaces of the base, respectively.

In an embodiment, a groove is defined at the bottom of the first insulating element, and an end of the current collecting plate is disposed in the groove.

In an embodiment, an assembly hole is defined on the first insulating member, the assembly hole is a stepped hole, the stepped hole includes a stepped surface, the upright post penetrates the assembly hole, and an end surface of the base is in contact with the stepped surface.

In an embodiment, the sealing ring includes a large-diameter section and a small-diameter section, the first insulating element is sleeved on the larger-diameter section, and the cover slip is sleeved on the smaller-diameter section.

In an embodiment, the current collecting plate and the pole column are connected by welding.

In an embodiment, a terminal and a second insulating element are sleeved on the pole column, and the terminal and the cover slip are insulated by the second insulating element.

In an embodiment, the terminal is provided with a mounting hole, the mounting hole is a stepped hole, an end surface of the pole column is provided with a flange, the pole column penetrates the mounting hole, and the flange is clamped in the mounting hole.

In an embodiment, the second insulating element is provided with first positioning protrusions, the terminal is provided with first positioning grooves, the first positioning grooves are matched with the first positioning protrusions; or, the second insulating element is provided with the first positioning grooves, and the terminal is provided with the first positioning grooves, and the first positioning grooves are matched with the first positioning protrusions.

In an embodiment, the cover slip is provided with a second positioning groove, the second insulating element is provided with a second positioning protrusion, and the second positioning groove is matched with the second positioning protrusion

In an embodiment, the second positioning groove is a cross-shaped, and the second positioning protrusion is the cross-shaped; or, the second positioning groove is a polygon, and the second positioning protrusion is the polygon; or, the second positioning groove is an ellipse, and the second positioning protrusion is the ellipse.

In an embodiment, the current collecting plate is provided with a fuse part.

A battery is provided in an embodiment of the present application, the cylindrical battery has the good sealing ability, is not easy to leak the liquid, has large the contact area between the current collecting plate and the pole column, has the small overcurrent internal resistance, has the low height of the pole column, and has the low production costs.

In a second aspect, the cylindrical battery is provided in an embodiment of the present application, including a housing and the above-mentioned cover plate of the cylindrical battery, and the housing is fixedly connected to the cover plate of the cylindrical battery.

Beneficial effects of the present application are that:
The cover plate of the cylindrical battery provided in the embodiment of the present application is different from the prior art in that the current collecting plate does not need to pass through the pole column, but is directly connected to the bottom of the pole column, thereby increasing the contact area between the pole column and the current collecting plate, and reducing the overcurrent internal resistance of the battery. Since the first insulating element is in contact with the pole column, there is no the current collecting plate therebetween, welding mark of the current collecting plate and the pole column will not affect connection between the first insulating element and the pole column. In addition, the sealing ring is directly in contact with the pole column, which makes connection more tight and has better sealing ability, and is not easy to occur a risk of leak the liquid. At the same time, the first insulating element can be arranged evenly between the current collecting plate and the cover slip, which ensures insulation of the current collecting plate and the cover slip, and avoids internal short circuit of the battery. Since there is no need to sleeve the current collecting plate on the pole column, a height of the pole column can be appropriately reduced, thereby saving raw materials of the pole column and reducing production cost.

The cylindrical battery provided by the embodiment of the present application provides the above-mentioned the cover plate of the cylindrical battery to be connected with the housing. The cover plate is compact through reasonable structural design and layout of the cover plate, so that the battery has high energy density. Moreover, the battery has good airtightness, which can effectively avoid the risk of leakage caused by poor connection between the first insulating element and the pole column. The pole column uses less raw materials, which greatly reduces production cost of the battery.

### BRIEF DESCRIPTION OF THE DRAWINGS

FIG. 1 is a sectional view of a middle longitudinal section provided by the present application.
FIG. 2 is an exploded view of a cover plate of a battery provided by the present application.
FIG. 3 is a schematic structural diagram of a first insulating element provided by the present application.
FIG. 4 is a schematic structural diagram of a terminal provided by the present application.
FIG. 5 is a schematic structural diagram of a second insulating element provided by the present application.

In the above figures:
100, current collecting plate; 200, pole column; 210, base; 220, upright post; 230, flange; 300, sealing ring; 400, first insulating element; 410, groove; 420, stepped surface; 500, cover slip; 510, second positioning groove; 600, second insulating element; 610, first positioning protrusion; 620, second positioning protrusion; 700, terminal; 710, first positioning groove.

### DETAILED DECRIPTION OF THE EMBODIMENTS

In description of the present application, it should be noted that terms "center", "upper", "lower", "left", "right", "vertical", "horizontal", "inner", " and "outside", etc. are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present application. In addition, terms "first" and "second" are only used to distinguish in terms of description and have no special meanings, and should not be construed as indicating or implying relative importance. Terms "first position" and "second position" are two different positions. Moreover, that a first feature is disposed "above" or "up" a second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

In description of the present application, it should be noted that unless otherwise specified and defined, terms "installed", "connected" should be understood in a broad sense, for example, it may be a fixed connection, a detachable connection, or a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present disclosure can be understood according to situations.

Embodiments of the present application are described in detail below. The examples of the embodiments are shown in the drawings, in which the same or similar labels throughout represent the same or similar elements or elements with the same or similar functions. The embodiments described below with reference to the drawings are exemplary and are only used to explain the present application, but cannot be understood as a limitation of the present application.

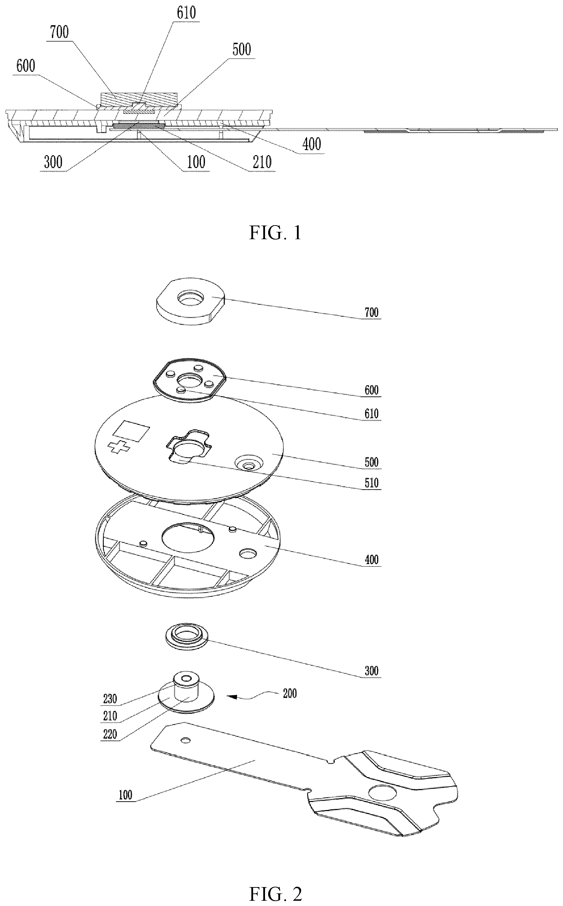

Referring to FIG. 1 and FIG. 2, a cover plate of a cylindrical battery is provided in an embodiment, including a pole column 200. A bottom of the pole column 200 is connected to a current collecting plate 100. The pole column 200 is sleeved with a sealing ring 300. A first insulating element 400 and a cover slip 500 are sequentially sleeved on an outside of the sealing ring 300 along a vertical direction. The first insulating element 400 insulates the current collecting plate 100 from the cover slip 500.

The current collecting plate 100 is connected to the bottom of the pole column 200 in the above-mentioned cover plate of the cylindrical battery. Compared with the related art where the current collecting plate 100 is sleeved on the pole column 200, the current collecting plate 100 does not need to be provided with an assembly hole equal to a diameter of the pole column 200, so that a contact area between the pole column 200 and the current collecting plate is greater, which reduces overcurrent internal resistance of a battery. In addition, since the current collecting plate 100 does not need to be sleeved on the pole column 200, a height of the pole column 200 can be reduced accordingly, thereby reducing use of raw materials and production costs. The first insulating element 400 is directly in contact with the pole column 200, which will not cause liquid leakage because of insufficient connection between the first insulating element 400 and the pole column 200 due to a welding mark between the pole column 200 and the current collecting plate 100. The cover slip 500 is sleeved on the sealing ring 300 being directly in contact with the pole column 200 to ensure sealing ability of connection. The first insulating element 400 can be flatly arranged between the current collecting plate 100 and the cover slip 500, which ensures insulating isolation between the current collecting plate 100 and the cover slip 500 and avoids internal short circuit of a battery.

Exemplarily, the pole column 200 includes a base 210 and an upright post 220 connected to each other. The current collecting plate 100 is connected to a side of the base 210 that is not connected with the upright post 220. A connection method of the current collecting plate 100 and the base 210 can be welding, for example, can be ultrasonic welding or laser welding. The sealing ring 300 is sleeved on the upright post 220, and its bottom is in contact with an end surface of the base 210. At the same time, the first insulating element 400 is sleeved outside the sealing ring 300, and the bottom of the first insulating element 400 is also in contact with the end surface of the base 210. Exemplarily, the pole column 200 may be a rivet, so that the sealing ring 300 is subjected to riveting pressure to ensure its good sealing effect. Since the current collecting plate 100 is not directly in contact with the first insulating element 400, but in contact with the end surface of the base 210 being flat, good insulation and sealing effects can be ensured, thereby avoiding short circuit or a danger of liquid leakage of the battery.

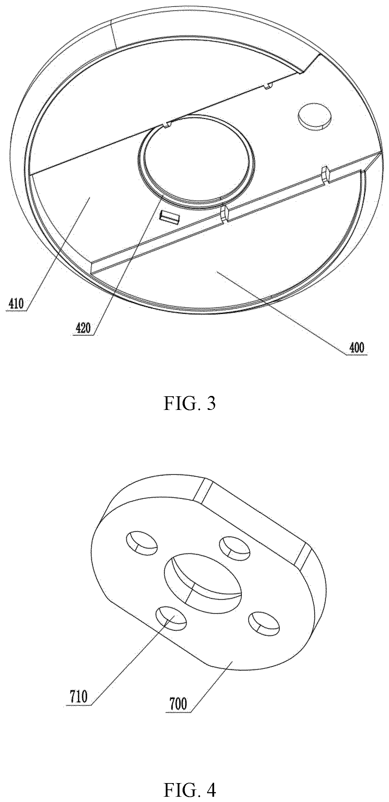

Exemplarily, referring to FIG. 2 and FIG. 3, a groove 410 is defined at a bottom of the first insulating element 400 to ensure compact structure of the cover plate. An end of the current collecting plate 100 is disposed in the groove 410. It can be understood that a shape of the groove 410 should be set according to a shape of a connection section between the current collecting plate 100 and the pole column 200.

Exemplarily, an assembly hole is defined on the first insulating element 400. The assembly hole is a stepped hole. The stepped hole includes a stepped surface 420. The upright post 220 passes through the assembly hole. The end surface of the base 210 is in contact with the stepped surface 420. Since the base 210 is disc-shaped, the stepped surface 420 is circular. With such a structural design, a position of the pole column 200 can be limited, at the same time, components can be closely arranged, internal space of the battery is saved, and a relatively high energy density of the battery is ensured.

Continuing to refer to FIG. 2, for example, the sealing ring 300 includes a large-diameter section and a small-diameter section. The first insulating element 400 is sleeved outside the large-diameter section. The cover slip 500 is sleeved outside the small-diameter section. It can be understood that a diameter of the assembly hole on the first insulating element 400 should be set according to an outer diameter of the large-diameter section of the sealing ring 300. The assembly hole on the first insulating element 400 can be greater than the outer diameter of the large-diameter section of the sealing ring 300, thereby saving raw materials. Similarly, the diameter of the assembly hole on the cover slip 500 should be set according to an outer diameter of the small-diameter section of the sealing ring 300, so that the cover slip 500 can pass through the pole column 200 and be tightly sleeved on the sealing ring 300. At the same time, an end surface of the large-diameter section of the sealing ring 300 is in contact with the bottom surface of the cover slip 500 to ensure good sealing ability.

Exemplarily, a terminal 700 and a second insulating element 600 are sleeved on the pole column 200. The terminal 700 and the cover slip 500 are insulated by the second insulating element 600. The terminal 700 is provided with a mounting hole. The mounting hole is a stepped hole. An end surface of the pole column 200 is provided with a flange 230. The pole column 200 passes through the mounting hole. The flange 230 is clamped in the mounting hole, which acts as a limit for the terminal 700 to prevent the terminal 700 from falling off from the pole column 200.

Exemplarily, the second insulating element 600 is provided with first positioning protrusions 610. Correspondingly, as shown in FIG. 4, first positioning grooves are defined on the terminal 700. The first positioning grooves 710 are matched with the first positioning protrusions 610, so as to limit position between the second insulating element 600 and the terminal 700. Of course, the first positioning grooves 710 may also be defined on the second insulating element 600, and the first positioning protrusions 610 may be defined on the terminal 700, so as to realize a positioning function. The first positioning protrusions 610 are cylindrical bumps, and the first positioning grooves 710 are cylindrical grooves in an embodiment. There are four first positioning protrusions 610 and four first positioning grooves 710, which are center-symmetrical with respect to a center of the element where they are located. Positioning component may be in other structural forms in other embodiments, as long as it is a structure capable of positioning, which is within the protection scope of the present application.

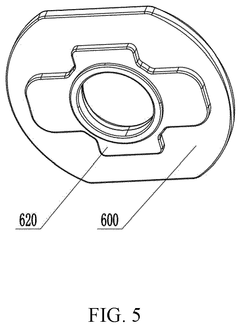

Exemplarily, referring to FIG. 2 and FIG. 5, a second positioning groove 510 is defined on the cover slip 500. A second positioning protrusion 620 is defined on the second insulating element 600. The second positioning groove 510 is matched with the second positioning protrusion 620. The second positioning groove 510 is cross-shaped, and is arranged concentrically with the assembly hole on the cover slip 500 in an embodiment. The second positioning groove 510 may be polygonal, oval or other shapes, and a shape of the second positioning protrusion 620 is set according to a shape of the second positioning groove 510 in other embodiments.

Exemplarily, a fuse part is defined on the current collecting plate 100. When temperature of a circuit is too high due to extreme conditions such as a short circuit, the fuse part can be fused by self-heating to quickly cut off a current loop, thereby protecting the circuit and improving safety of the battery. The fuse part can be formed by thinning the current collecting plate 100 or coating it with a low melting point metal.

A cylindrical battery is also provided in an embodiment, including a housing and the above-mentioned cover plate of the cylindrical battery. The cover plate of the cylindrical battery is fixedly connected to the housing. The housing can be made of aluminum or other metal materials. The housing may be connected with the cover slip 500 by welding.

The cylindrical battery makes structure of the cover plate compact through reasonable structural design and layout of the cover plate, so that the battery has high energy density. Moreover, the battery has good airtightness, which can effectively avoid the risk of liquid leakage caused by poor connection between the first insulating element 400 and the pole column 200. The pole column 200 uses less raw materials, thereby saving production costs.

The cover plate of the cylindrical battery of the present application is different from the prior art in that the current collecting plate does not need to pass through the pole column, but is directly connected to the bottom of the pole column, thereby increasing the contact area between the pole column and the current collecting plate, and reducing the overcurrent internal resistance of the battery. Since the first insulating element is in contact with the pole column, there is no the current collecting plate therebetween, welding mark of the current collecting plate and the pole column will not affect connection between the first insulating element and the pole column. In addition, the sealing ring is directly in contact with the pole column, which makes connection more tight and has better sealing ability, and is not easy to occur a risk of leak the liquid. At the same time, the first insulating element can be arranged evenly between the current collecting plate and the cover slip, which ensures insulation of the current collecting plate and the cover slip, and avoids internal short circuit of the battery. Since there is no need to sleeve the current collecting plate on the pole column, a height of the pole column can be appropriately reduced, thereby saving raw materials of the pole column and reducing production cost.

## Claims

1. A cover plate of a cylindrical battery, comprising a pole column (200), wherein a bottom of the pole column (200) is connected to a current collecting plate (100), the pole column (200) is sleeved with a sealing ring (300), a first insulating element (400) and a cover slip (500) are sequentially sleeved on an outside of the sealing ring (300) along a vertical direction, and the first insulating element (400) insulates the current collecting plate (100) from the cover slip (500).

2. The cover plate of the cylindrical battery according to claim 1, wherein the pole column (200) comprises a base (210) and an upright post (220) connected to each other, the current collecting plate (100) is connected to a side of the base (210) away from the upright post (220), the sealing ring (300) is sleeved on the upright post (220), and a bottom of the sealing ring (300) and a bottom of the first insulating element (400) are in contact with end surfaces of the base (210), respectively.

3. The cover plate of the cylindrical battery according to claim 2, wherein a groove (410) is defined at the bottom of the first insulating element (400), and an end of the current collecting plate (100) is disposed in the groove (410).

4. The cover plate of the cylindrical battery according to claim 2, wherein an assembly hole is defined on the first insulating member (400), the assembly hole is a stepped hole, the stepped hole comprises a stepped surface (420), the upright post (220) penetrates the assembly hole, and an end surface of the base (210) is in contact with the stepped surface (420).

5. The cover plate of the cylindrical battery according to any one of claims 1-4, wherein the sealing ring (300) comprises a large-diameter section and a small-diameter section, the first insulating element (400) is sleeved on the larger-diameter section, and the cover slip (500) is sleeved on the smaller-diameter section.

6. The cover plate of the cylindrical battery according to any one of claims 1-4, wherein the current collecting plate (100) and the pole column (200) are connected by welding.

7. The cover plate of the cylindrical battery according to any one of claims 1-4, wherein a terminal (700) and a second insulating element (600) are sleeved on the pole column (200), and the terminal (700) and the cover slip (500) are insulated by the second insulating element (600).

8. The cover plate of the cylindrical battery according to claim 7, wherein he terminal (700) is provided with a mounting hole, the mounting hole is a stepped hole, an end surface of the pole column (200) is provided with a flange (230), the pole column (200) penetrates the mounting hole, and the flange is clamped in the mounting hole.

9. The cover plate of the cylindrical battery according to claim 7, wherein the second insulating element (600) is provided with first positioning protrusions (610), the terminal (700) is provided with first positioning grooves (710), the first positioning grooves (710) are matched with the first positioning protrusions (610); or, the second insulating element (600) is provided with the first positioning grooves (710), the terminal (700) is provided with the first positioning grooves (710), and the first positioning grooves (710) are matched with the first positioning protrusions (610).

10. The cover plate of the cylindrical battery according to claim 7, wherein the cover slip (500) is provided with a second positioning groove (510), the second insulating element (600) is provided with a second positioning protrusion (620), and the second positioning groove (510) is matched with the second positioning protrusion (620).

11. The cover plate of the cylindrical battery according to claim 10, wherein the second positioning groove (510) is a cross-shaped, and the second positioning protrusion (620) is the cross-shaped; or, the second positioning groove (510) is a polygon, and the second positioning protrusion (620) is the polygon; or, the second positioning groove (510) is an ellipse, and the second positioning protrusion (620) is the ellipse.

12. The cover plate of the cylindrical battery according to any one of claims 1-4, wherein the current collecting plate (100) is provided with a fuse part.

13. A cylindrical battery, comprising a housing and the cover plate of the cylindrical battery according to any one of claims 1-12, wherein the housing is fixedly connected to the cover plate of the cylindrical battery.
